# EUROPÄISCHE PATENTANMELDUNG

(11) **EP 0 810 447 A2**
(43) Veröffentlichungstag der Anmeldung: **03.12.1997**
(21) Anmeldenummer: 97401188.4
(22) Anmeldetag: 29.05.1997
(51) Int. Cl.: G01S 1/02, G01S 1/18

(54) **Zweifrequenz-Gleitwegsenderstation für das standardisierte Instrumentenlandesystem ILS**

(30) Priorität: 30.05.1996 DE 19621608
(71) Anmelder: ALCATEL ALSTHOM COMPAGNIE GENERALE D'ELECTRICITE, 75008 Paris (FR)
(72) Erfinder: Kleiber, Herbert, 71638 Ludwigsburg (DE); Pfuhl, Christoph, 71679 Asperg (DE)
(74) Vertreter: Kugler, Hermann, Dipl.-Phys.

(57) **Zusammenfassung**

Es wird eine Zweiweg-Gleitwegsendestation für das standardisierte ILS angegeben, die eine Einrichtung zur Überwachung der im Fernfeld wirksamen Kurs- und Clearance-Signale enthält. Signale von in den Antennen-Strahlergruppen (A1 ... A3) befindlichen Auskoppelsonden (KS1 ... KS3) werden zusammen mit einem Referenzsignal einem I/Q-Konverter (IQ) zugeführt. Die von diesem gelieferten Real- und Imaginäranteile der Modulationsfrequenzen werden in einem nachgeschalteten Signalprozessor (SP) einer Fourier-Transformation unterworfen und in der Frequenzebene mit Richtwerten für am Boden reflektierte Anteile der von den Antennen abgestrahlten Signale verknüpft. Die entstehenden fernfeldäquivalenten Signale werden mit abgespeicherten Sollwerten verglichen. Bei unzulässiger Abweichung wird die Um- oder Abschaltung der Anlage veranlaßt.

## Beschreibung

Die Erfindung betrifft eine Zweifrequenz-Gleitwegsendestation für das Instrumentenlandesystem ILS gemäß dem Oberbegriff des Patentanspruchs 1.

Eine derartige Station ist aus der DE 3332541 C2 bekannt. In dieser Station werden zur Überwachung der im Fernfeld wirksamen Signale von Kurs und Clearance Teile der von den Antennen abgestrahlten Summensignale über den einzelnen Antennen zugeordnete Auskoppelsonden entnommen und, zusammen mit dem Signal einer im Nahfeld angeordneten Monitorantenne sowie einem dem Sender der Station entnommenen Referenzsignal, in ein passives Koppelnetzwerk eingespeist, in dem mittels Addiergliedern, Dämpfungsgliedern und die Phasenlage beeinflussender Schaltungsteile, die den zu überwachenden, im Fernfeld wirksamen Signalen entsprechenden Werte für Clearance und verschiedene Komponenten des Kurssignals gewonnen werden. Nach genauerer Überprüfung der Äquivalenz derartig gewonnener Signale mit den Fernfeldsignalen durch Flugvermessung, werden diese dann regelmäßig in einer Auswerteschaltung mit abgespeicherten Sollwerten verglichen und auf eventuelle Abweichungen hin überwacht.

Das bei der bekannten Einrichtung verwendete passive Koppelnetzwerk ist sehr aufwendig und außerdem empfindlich gegenüber Änderungen der räumlichen Anordnung der Komponenten oder der elektrischen Feldverteilung in deren Umgebung. Auch wird bei der bekannten Einrichtung der Einfluß des Bodens, der bei Gleitwegsendestationen als virtueller Strahler genutzt wird, nicht in die Überwachung einbezogen, so daß eine Fernfeldäquivalenz nur bedingt gegeben ist.

In der EP 0478 424 B1 sind ein Verfahren und eine Vorrichtung zur permanenten Kontrolle der Integrität einer Sendung - unter anderem der eines Gleitwegsenders eines ILS-Systems (Anspruch 7) - angegeben, bei dem zu überwachende, an vorgegebenen Punkten innerhalb des Fernfeldes wirksame Signalkomponenten aus den abgestrahlten Signalen unter Einbezug sämtlicher der Messung zugänglicher feldbeeinflussender Parameter und während des Betriebes des Systems der Messung nicht zugänglicher feldbeeinflussender Parameter berechnet werden, wobei letztere, z.B. Antennengewinn und Bodenreflexion, mit Hilfe eines mathematischen Modells bestimmt werden. In einer Reihe von Meßschritten werden an verschiedenen Aufzeichnungspunkten empfangene Signale nacheinander mit einem in Schritten von 2π/n (n = ganze Zahl) phasenverschobenen Referenzsignal derselben HF-Grundfrequenz kombiniert und jeweils die Amplituden der Modulationsfrequenzen gewonnen und aufgezeichnet. Die aufgezeichneten Werte werden als Werte einer Funktion aufgefaßt, von der Amplituden und Argumente bestimmter Terme ihrer Fourier-Transformierten extrahiert und aus dieser die Werte der nicht meßbaren Parameter ermittelt werden. Mit dem dann verfügbaren vollständigen Satz von Parameterwerten läßt sich der Feldzustand an jedem wichtigen Punkt innerhalb des überwachten Luftraumes berechnen und mit einem vorgeschriebenen Wert vergleichen.

Das beschriebene Verfahren benötigt eine große Zahl von Messungen an möglichst vielen Meßpunkten und damit viel Zeit, um den Wert einer im Fernfeld wirksamen Feldkomponente zu berechnen und zu überprüfen. Im Kategorie III-Betrieb, wo Ausfälle und plötzliche unzulässige Abweichungen der vorgeschriebenen Werte für Kursposition, Kursbreite und Clearance in einer Zeit von weniger als 1 s erkannt und durch Um- oder Abschaltung der Sendeanlage beantwortet werden müssen, scheint dieses Verfahren zu langsam.

Es ist außerdem nicht erforderlich, die während des Betriebes nicht meßbaren Parameter durch Verwendung des mathematischen Modells explizit zu berechnen, da derartige Werte ohnehin Änderungen unterworfen sind, die sich auch durch Rechnung nicht eliminieren lassen.

Aufgabe der Erfindung ist eine Gleitweg-Sende-Station, die eine einfachere und schneller reagierende Überwachungseinrichtung aufweist. Eine derartige Gleitweg-Sendestation wird durch die Merkmale des Patentanspruchs 1 beschrieben.

Durch Einsatz eines I/Q-Konverters, dessen Ausgänge über A/D-Wandler auf einen leistungsfähigen Prozessor geführt sind, wird hier erreicht, daß die Signale der Auskoppelsonden der drei für den Gleitweg verwendeten Antennengruppen in kurzer Zeit und ohne Verwendung eines aufwendigen Koppelnetzwerkes in Form ihrer Real- und Imaginärteile im Rechner für die Berechnung der an bestimmten Orten im Fernfeld gültigen Werte der zu überwachenden Signalkomponenten, wie z.B. Kursposition, Kursbreite und Clearance zur Verfügung stehen.

Bei der Berechnung dieser zu überwachenden Signalkomponenten wird der Einfluß von während des Betriebes der Messung nicht zugänglichen Parametern in Form von Erfahrungswerten mitberücksichtigt. Änderungen der Signalkomponenten, deren zeitlicher Verlauf auf Bauelementeausfall schließen läßt, können von langsamem Abdriften von Einstellungen oder von durch äußere Einflüsse hervorgerufenen Änderungen unterschieden werden.

Ausgestaltungen der Gleitweg-Sendestation nach der Erfindung sind in den Unteransprüchen beschrieben.

So betrifft Patentanspruch 2 den Einbezug von Signalen eines im Nahfeld der Antenne angeordneten Feld-Dipols.

Patentanspruch 3 betrifft eine Maßnahme zur Früherkennung von Drifterscheinungen in der Signalabstrahlung.

Patentanspruch 4 sieht bei zeitmultiplexer Signalauswertung eine Möglichkeit vor, auf gefährliche Signalveränderungen schneller zu reagieren als auf Signalveränderungen, die keine unmittelbare Gefährdung von Flügen darstellen.

Anhand von 3 Figuren soll nun ein Ausführungsbeispiel der Gleitweg-Sendestation nach der Erfindung ausführlich beschrieben und seine Funktion erklärt werden.

Die Figuren zeigen im einzelnen:
- Fig 1: Die Signalabstrahlung einer aus drei Elementen bestehenden (M-Type) Gleitweg-Sendeantenne.
- Fig 2: Ein Blockschaltbild der Überwachungseinrichtung nach der Erfindung.
- Fig 3: Ein Berechnungsschema zur Gewinnung der zu überwachenden Signale.

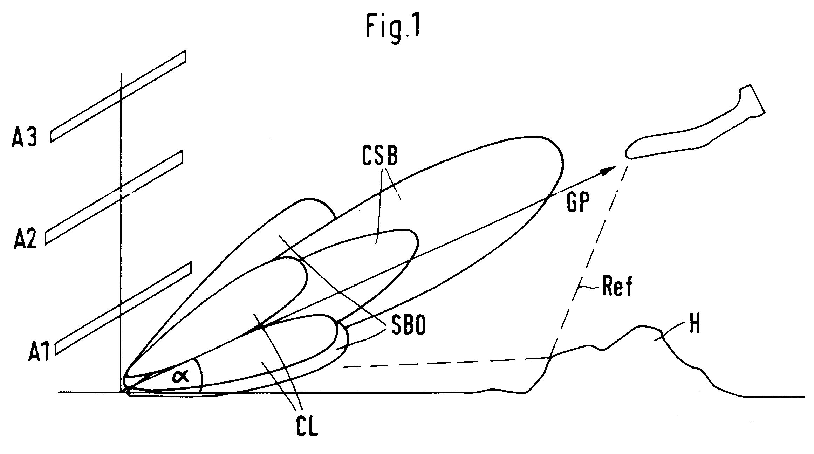

In Fig 1 ist schematisch dargestellt, in welcher Stärke welche Signale von einer Gleitweg-Sendeantenne abgestrahlt werden und in welchen Winkelbereich diese Abstrahlung erfolgt. Die Sendeantenne besitzt in diesem Falle drei Antennenelemente A1, A2 und A3, die in bekannter Weise genau vorgegebene Summensignale abstrahlen. Die Summensignale überlagern sich im Raum und bilden die dargestellte Signalverteilung. Eine Gleitwegebene enthält den Gleitweg GP, der mit einem Neigungswinkel α von üblicherweise 3° zur Landebahn hin einfällt. Die dargestellte M-Type-Antenne strahlt das mit den Frequenzen 90 Hz und 150 Hz modulierte Kurssignal sowohl mit einer den Träger und Seitenbänder enthaltenden Komponente CSB als auch mit einer ausschließlich Seitenbänder enthaltenden Komponente SBO steiler gerichtet ab als der Neigungswinkel a und reduziert damit die Gefahr von Reflexionen Ref an am Boden befindlichen Hindernissen H - derartige Reflexionen können zu Verbiegungen (bends) des übermittelten Anflugpfades führen -. Obwohl hier gegenüber der Gleitwegebene unsymmetrisch abgestrahlt wird, sind die Modulationsgrade für die Niederfrequenzen 90 Hz und 150 Hz, wie bei zur Gleitwegebene symmetrischer Abstrahlung, in der Gleitwegebene gleich und damit der Modulationstiefenunterschied DDM = 0. Unterhalb des Gleitweges, wo infolge der steilen Abstrahlung die CSB- und SBO-Feldstärken niedrig sind, wird ein Clearance-Signal wirksam, dessen Feldstärke im Bereich des Gleitweges gering ist und dessen eventuelle Reflexionen aufgrund des Capture-Effektes des in seiner Trägerfrequenz verschobenen, stärkeren CSB-Signals nicht empfangen werden.

Überwacht werden müssen in jedem Falle die Kurslage, also die Position der Gleitwegebene, die durch DDM = 0 ausgezeichnet ist, und vom Neigungswinkel der Gleitwegebene von α = 3° nicht mehr als ± 0,02 α entsprechend etwa 2,8 % DDM abweichen darf, ferner die Kursbreite, deren Sollwert durch ein DDM von 17,5 % entsprechend einer Winkelabweichung vom Neigungswinkel der Gleitwegebene von ± 0,24 α gegeben ist, und das Clearance-Signal, das ein DDM von 30 % aufweisen soll.

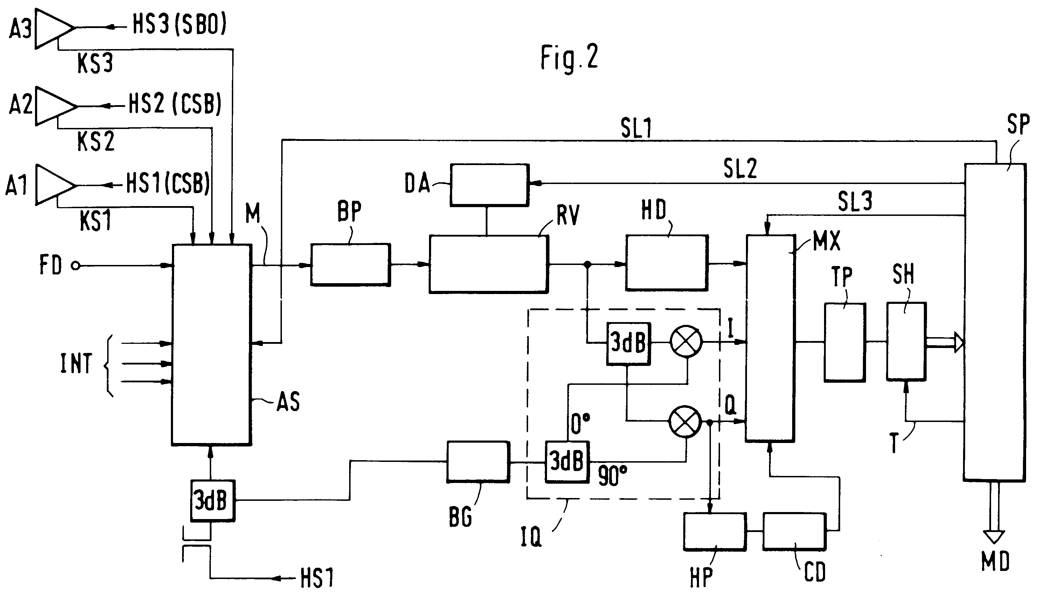

In Fig 2 ist ein Blockschaltbild der für die Überwachung wichtigen Teile der Gleitwegsendestation wiedergegeben.
Gleitweg-Sendeantennenelemente A1, A2 und A3 werden mit Sendesignalen HS1, HS2 und HS3 gespeist, die aus Anteilen eines Hochfrequenz-Trägersignales und verschiedenen Seitenbandsignalen zusammengesetzt sind und im Fernfeld die für den Gleitweg der jeweiligen ILS-Anlage vorgeschriebene Feldverteilung herstellen.

Zur Überwachung der vorgeschriebenen Signalabstrahlung werden den Sendeantennen über Auskoppelsonden Auskoppelsignale KS1, KS2 und KS3 entnommen und einem Auswahlschalter AS zugeführt. Der Auswahlschalter wird von einem Signalprozessor SP über eine Steuerleitung SL1 angesteuert und verbindet einzelne am Auswahlschalter anliegende Signale für eine vorgegebene Abtastzeit (z.B. 40 ms) mit einem Meßkanaleingang M. Neben den Auskoppelsignalen KS1, KS2 und KS3 liegen am Auswahlschalter noch das Ausgangssignal einer Nahfeldsonde FD, das Sendesignal HS1 als Referenzsignal und verschiedene interne Signale INT an. Letztere dienen der internen Prüfung der Überwachungseinrichtung sowie der Prüfung von für den Störungsfall bereitgehaltenen Ersatzbaugruppen.

Die Häufigkeit der Durchschaltung der einzelnen Signale ist abhängig davon, wie schnell die Überwachungseinrichtung auf eine Veränderung des jeweiligen Signals zu reagieren hat. So werden die sehr wichtigen Auskoppelsignale KS1 ... KS3 z.B. häufiger auf den Meßkanal geschaltet als die internen Signale oder das Ausgangssignal der Nahfeldsonde.

Im Meßkanal wird das jeweils aufgeschaltete Signal zunächst einem Bandpaßfilter BP zugeführt, dort von unerwünschten, außerhalb des ILS-Gleitweg-Nutzbandes gelegenen Störsignalen befreit und anschließend in einem vom Signalprozessor SP über eine Steuerleitung SL2 und einen D/A-Wandler gesteuerten Regelverstärker RV auf eine definierte Amplitude verstärkt. Vom Verstärkerausgang gelangt das auszuwertende Signal in einen I/Q-Konverter IQ, in dem es mit einem, dem I/Q-Konverter über einen anderen Eingang eingespeisten Referenzsignal, in diesem Falle einem aus dem Antennensignal HS1 abgeleiteten, in einem Begrenzer BG amplitudenbegrenzten Signal, gemischt wird. Die Mischung erfolgt in bekannter Weise mit einem ohne Phasenverschiebung zugeführten und einem um 90° phasenverschobenen Anteil des Referenzsignals und bewirkt neben der Demodulation die Zerlegung des Niederfrequenzanteils des auszuwertenden Signals in seinen Realteil I und seinen Imaginärteil Q. Beide Ausgangssignale des I/Q-Konverters gelangen auf einen Multiplexer MX aus dem sie vom Signalprozessor über ein restliche Hochfrequenzanteile sperrendes Tiefpaßfilter TP und ein Halte- und Abtastglied SH, das gleichzeitig eine A/D-Wandlung vornimmt, in seinen Eingangsspeicher übernommen werden.

Mit dem Ausgang des Regelverstärkers RV ist auch ein Hüllkurvendetektor HD verbunden, der ein Signal, dessen Auswertung weniger zeitkritisch ist, z.B. das Ausgangssignal der Nahfeldsonde FD, ohne eine I/Q-Wandlung demoduliert und dem Multiplexer zuführt.

Um das um 8 KHz gegenüber dem Kurssignal frequenzversetzte Clearance-Signal zu erhalten, ist in der Figur ein Detektor CD mit vorgeschaltetem Hochpaßfilter HP vorgesehen, dem der vom I/Q-Konverter ausgegebene Imaginäranteil Q des auszuwertenden Signals ebenfalls zugeführt wird. Das Clearance-Modulationssignal wird ebenfalls dem Multiplexer MX zugeführt und kann dort vom Signalprozessor übernommen werden.

Vom Signalprozessor erarbeitete Überwachungssignale werden zur Einleitung von Umschaltungen oder Abschaltungen oder zur Vorwarnung bei drohender Überschreitung der vorgeschriebenen Überwachungsgrenzen über einen Monitorbus MD ausgegeben.

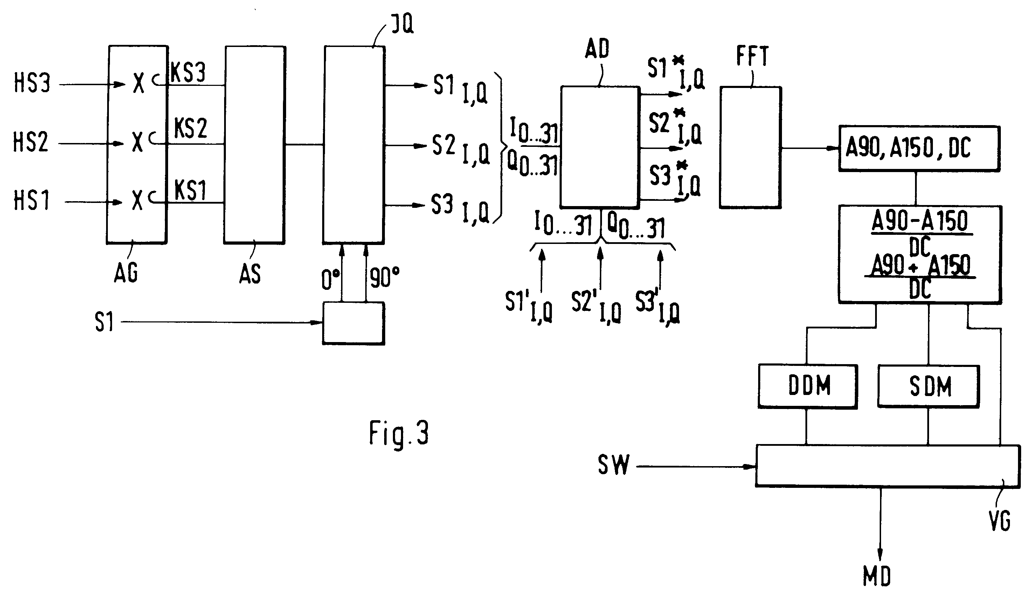

Fig 3 zeigt schematisch den Gang der Berechnung der Überwachungssignale aus den Auskoppelsignalen unter Einbezug von Parametersignalen, die als Erfahrungswerte z.B. den Einfluß des Erdbodens wiedergegeben und keinen raschen Veränderungen unterworfen sind.

Auskoppelsonden in den Strahlergruppen AG der Antennen übernehmen einen geringen Teil der Antennen-Speisesignale HS1, HS2, HS3 und führen diese, wie bereits in Fig 2 dargestellt, über einen Auswahlschalter AS zeitmultiplex einem I/Q-Konverter (IQ) zu. Der Auswahlschalter AS wird vom Signalprozessor SP (Fig 2) so angesteuert, daß er alle 40 ms ein anderes Auskoppelsignal KS1 ... KS3 über ein in Fig 2 dargestelltes Filter BP und einen vom Signalprozessor aus gesteuerten Regelverstärker RV auf den I/Q-Konverter IQ aufschaltet. Im I/Q-Konverter werden die niederfrequent modulierten Hochfrequenzsignale mit einer aus dem Antennenspeisesignal HS1 oder einer dessen Hochfrequenz liefernden Quelle entnommenen Referenzfrequenz (in 0° und 90° Phasenlage) gemischt und dadurch die Real- und Imaginärteile der Modulationssignale 90 Hz und 150 Hz der Auskoppelsignale KS1 ... KS3 gewonnen.

Diese werden abgetastet (insgesamt z.B. 32 Abtastwerte pro Aufschaltintervall) und in einem Addierschritt AD, der im Signalprozessor abläuft, mit Parametersignalen S1'_{IQ} ... S3'_{IQ} verknüpft. Die Parametersignale sind Richtwerte, die in erster Linie den Strahlungsbeitrag des Erdbodens im Nahbereich vor der Antenne wiedergeben und nach gespeicherten bekannten, die individuelle Antennenhöhe und den Abstrahlwinkel berücksichtigenden Formeln, fortlaufend aus den Signalen S1_{IQ} ... S3_{IQ} berechnet werden. Alle aus der Verknüpfung hervorgehenden Signale S1*_{IQ} ... S3*_{IQ} ( 6 Signale in Form von jeweils 32 Abtastwerten) werden danach einer Fast-Fourier-Transformation FFT unterworfen und somit in die Frequenzebene transferiert, in der auf besonders einfache Weise die Amplituden A90, A150 der jeweiligen Modulationssignale 90 Hz und 150 Hz und die Amplitude DC des unmodulierten Trägers ermittelt werden können. Die DDM (Difference of Depth of Modulation) und die SDM (Sum of Depth of Modulation) kann dann aus den Beziehungen DDM = (A90 - A150) / DC und SDM = (A90 + A150) / DC leicht bestimmt werden.

In einem nachfolgenden Vergleichsschritt VG erfolgt die Prüfung der vorgegebenen, berechneten Meßwerte durch Vergleich mit gespeicherten Sollwerten SW.

Die Überwachung des Clearance Signals erfordert keine I/Q-Zerlegung, da die Auswertung mittels des Detektors CD genau genug und nicht zeitkritisch ist. Auch die Signale der Nahfeldsonde FD brauchen nicht dem I/Q-Konverter zugeführt werden. Zu ihrer Demodulation genügt der Hüllkurvendetektor HD. Die Nahfeldsonde, die DDM = 0 liefern soll, wird vor allem benötigt, um mechanische Veränderungen der Sendeantenne, z.B. eine Neigung des Antennenmastes zu erkennen, die über eine Auswertung der Auskoppelsondensignale möglicherweise nicht erkannt wird.

## Patentansprüche

1. Zweifrequenz-Gleitwegsendestation für das standardisierte Instrumentenlandesystem ILS mit einer Sendeeinheit, die über mehrere Antennen-Strahlergruppen (A1 .. A3) hochfrequente, mit Niederfrequenz modulierte Summensignale aussendet, welche sich im Raum überlagern und dadurch vorgeschriebene, im Fernfeld wirksame Kurs- und Clearance-Signale bilden, und mit einer Einrichtung zur Überwachung dieser im Fernfeld wirksamen Signale, welche Ausgangssignale (KS1 .. KS3) von im Bereich einzelner oder aller Antennenstrahler angeordneten Auskoppelsonden zusammen mit einem einem Hochfrequenzsender der Station entnommenen Referenzsignal (HS1) auswertet und dabei fernfeldäquivalente Signale gewinnt, mit abgespeicherten Sollwerten vergleicht und eine Abschaltung oder Umschaltung der Sendestation veranlaßt, wenn eine unzulässige Abweichung eines fernfeldäquivalenten Signals von seinem Sollwert festgestellt wird,
**dadurch gekennzeichnet**, daß mindestens ein I/Q-Konverter (IQ) vorgesehen ist, dem die Signale (KS1 ... KS3) der Auskoppelsonden jeweils zusammen mit dem Referenzsignal (HS1) zugeführt werden, daß die Ausgänge des I/Q-Konverters über A/D-Wandler mit einem Überwachungsprozessor verbunden sind, der aus den vom I/Q-Konverter gelieferten Real- und Imaginärteilen der Modulationsanteile (S1 ... S3) der Auskoppelsondensignale mit Hilfe einer Fourier-Transformation zu überwachende, an vorgegebenen Orten im Fernfeld wirksame Signale unter rechnerischer Berücksichtigung von Richtwerten für am Boden reflektierte Anteile der abgestrahlten Summensignale ermittelt und zum Vergleich mit den entsprechenden Sollwerten (SW) zur Verfügung stellt.

2. Zweifrequenz-Gleitwegsendestation nach Anspruch 1, dadurch gekennzeichnet, daß zusätzlich das Ausgangssignal einer im Nahfeld vor der Antennenanlage positionierten Nahfeldsonde ausgewertet und eine ermittelte DDM mit einem gespeicherten vorgegebenen Wert verglichen wird.

3. Zweifrequenz-Gleitwegsendestation nach Anspruch 1 oder Anspruch 2, dadurch gekennzeichnet, daß zusätzlich enger als die vorgeschriebenen Sollwerte tolerierte Sollwerte gespeichert sind und daß das Über- bzw. Unterschreiten der Toleranzgrenzen eines derartigen, enger tolerierten Sollwertes ein Warnsignal auslöst.

4. Zweifrequenz-Gleitwegsendestation nach einem der vorstehenden Ansprüche, dadurch gekennzeichnet, daß die Signale KS1 ... KS3 der Auskoppelsonden und andere zu überwachende Signale der Überwachungseinrichtung im Zeitmultiplex zugeführt werden und daß Signale, deren Veränderungen eine schnelle Reaktion seitens der Überwachungseinrichtung erfordern, häufiger zur Überwachungseinrichtung durchgeschaltet werden als andere Signale.
